# EUROPEAN PATENT APPLICATION

(11) **EP 1 094 422 A2**
(43) Date of publication of application: **25.04.2001**
(21) Application number: 00309231.9
(22) Date of filing: 19.10.2000
(51) Int. Cl.: G06T 11/20

(54) **Systems and methods for ordering categorical attributes to better visualize multidimensional data**

(30) Priority: 21.10.1999 US 422708
(71) Applicant: International Business Machines Corporation, Armonk, NY 10504 (US)
(72) Inventor: Hellerstein, Joseph L., Winchester, Hampshire S021 2JN (GB); Ma, Sheng, Winchester, Hampshire S021 2JN (GB)
(74) Representative: Burt, Roger James, Dr.

(57) **Abstract**

A computer-based method of processing multidimensional data is disclosed which comprises the steps of: (i) obtaining categorical attributes associated with the multidimensional data; (ii) automatically ordering at least a portion of the categorical attributes associated with the multidimensional data wherein the automatic ordering step arranges the attributes to provide a substantially optimized visualization of the categorical attributes; and (iii) making results of the automatic ordering step available for use in accordance with a data visualization system.

## Description

The present invention generally relates to data exploration and analysis techniques and, in particular, to systems and methods for visualizing multidimensional data for use in such data exploration and analysis techniques.

Visualization techniques are becoming increasingly important for the analysis and exploration of multidimensional data sets. A major advantage of visualization techniques over other non-visual approaches, such as data mining, statistics, and machine learning techniques, is that visualizations allow a direct interaction with the user and provide an immediate feedback, as well as user steering. Because of this, visualization is typically the core of an exploratory system for analysis of multidimensional data. Examples of such systems include both general purpose software, such as Diamond, Data Explorer, and specialized systems, such as EventBrowser for event data, all available from IBM Corporation. The EventBrowser is described in "EventBrowser: A flexible tool for scaleable analysis of event data," S. Ma and J.L. Hellerstein, DSOM, 1999 and in the U.S patent application identified by Serial No. 09/359,874, filed on July 27, 1999, and entitled "Systems and Methods for Exploratory Analysis of Data for Event Management," the disclosures of which are incorporated herein by reference. Visualization techniques are also incorporated by most data mining products, such as the Intelligent miner from IBM Corporation, MineSet from SGI, etc.

While a great deal of work has addressed visualization of numeric data, many domains require visualization of a large amount of categorical data. Examples of such data are: city names in census data, equipment manufacturers in inventory data, and host names in network management data.

When visualization techniques are applied to categorical data, a key issue not yet addressed systematically by the prior art is how to order the values of categorical data for better visualization. In this invention, we provide solutions to address this and other issues.

Unlike numeric data, categorical values provide information about which category an object belongs to, and thus does not provide any information about distance and ranking of objects. This is problematic for commonly-used visualization techniques, such as scatter plots and parallel coordinate plots, since categorical values typically need to be mapped to axis coordinates. Technically, any order of the categorical values is valid. However, properly ordering the data can greatly improve the quality of the visualizations, and is crucial for visually exploring categorical data.

To illustrate how visualizations can be improved by properly ordering categorical data, we use event data collected from a production network containing hundreds of elements (e.g., routers, hubs, and servers). We focus on three categorical attributes: host name, which is the source of the event; event type, which specifies what happened (e.g., a connection was lost); and the time stamp of when the event occurred. The specific data set used herein to illustrate the invention contains over 10,000 events generated by 160 hosts with 20 event types in a three-day period. We are interested in: (1) when hosts generate events; (2) whether events are correlated temporally and spatially; and (3) how hosts relate to the types of events generated. In our experience (e.g., in the course of developing the above-mentioned EventBrowser system), a scatter plot is suitable for items (1) and (2), while a parallel coordinate plot works well for (3). We first address the ordering issue for two-dimensional scatter plots.

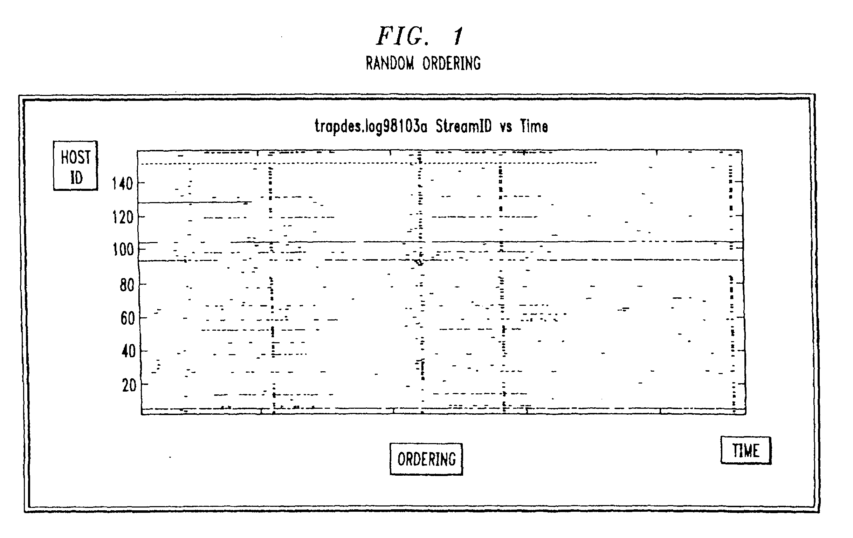

FIG. 1 shows a scatter plot of the aforementioned data. The x-axis is time, and the y-axis is the host name. An event is represented by a dot for a specific time and host. Since host names are categorical, they must be mapped into a unique number on the y-axis. That is, a total order is imposed on the categorical values. One key issue addressed in accordance with the invention is how to determine the total order of categorical values. One approach is to order categorical values in an arbitrary way. This approach will serve as a baseline for comparison.

The approach shown in FIG. 1 orders host names on the y-axis in an arbitrary or random way. Since points are spread fairly "uniformly" across the plot, FIG. 1 provides little insight into the data.

From the above example, we can conclude that proper ordering of categorical values is crucial for visualizing categorical data. Without it, information embedded in data can hardly be visualized.

In the prior art, two approaches have been offered to resolve the ordering issue. The first approach orders categorical values manually. In this approach, a user can explicitly change the order of categorical data through operations such as dragging-and-dropping. The second approach orders values by an auxiliary numerical attribute, see "XmdvTool: Integrating multiple methods for visualizing multivariate data," M.O. Ward, Visualization, 1994; and Diamond software from IBM Corporation. For example, categorical attribute values can be sorted by their counts or by the corresponding time attribute. Needless to say, these two approaches can be effective for small data sets with few categorical attributes and values. However, they are cumbersome for large data sets because:
(1) Both approaches tune the order manually, and thus are not easy to scale up. To understand this, we note the fact that the number of possible orders grows exponentially as the number of attributes and their values increases. As a result, it becomes difficult and time-consuming to explore manually all possible combinations for large data.
(2) Both approaches depend on inputs from a knowledgeable end-user. This creates a so-called knowledge acquisition bottleneck. In addition, because a proper order of categorical data depends on applications and what a user looks for, this makes it more difficult to find a knowledgeable end-user.
(3) Both approaches are not related to a visual task, and therefore can not, in general, ensure the best visualization quality.

To summarize, the prior art teaches to order categorical data manually. As a result, it is difficult to scale up, and is inadequate to support visually exploratory analysis of large categorical data.

The present invention seeks to provide systems and methods which can order categorical data, and thus provide a user with higher quality visualization to explore and analyze large amounts of categorical data.

According to one aspect of the present invention, a computer-based method of processing multidimensional data, the method comprises the steps of: obtaining categorical attributes associated with the multidimensional data; automatically ordering at least a portion of the categorical attributes associated with the multidimensional data wherein the automatic ordering step arranges the attributes to provide enhanced visualization of the categorical attributes; and making results of the automatic ordering step available for use in accordance with a data visualization system.

According to a second aspect of the present invention, apparatus for processing multidimensional data, the apparatus comprises: at least one processor operative to: (i) obtain categorical attributes associated with the multidimensional data; (ii) automatically order at least a portion of the categorical attributes associated with the multidimensional data wherein the automatic ordering operation arranges the attributes to provide enhanced visualization of the categorical attributes; and (iii) make results of the automatic ordering step available for use in accordance with a data visualization system.

According to a third aspect of the invention an article of manufacture for processing multidimensional data comprises a machine readable medium containing one or more programs which when executed implement the steps of: obtaining categorical attributes associated with the multidimensional data; automatically ordering at least a portion of the categorical attributes associated with the multidimensional data wherein the automatic ordering step arranges the attributes to provide enhanced visualization of the categorical attributes; and making results of the automatic ordering step available for use in accordance with a data visualization system.

The present invention provides methods and apparatus for automatically ordering categorical data for improved visualization. The invention provides a computer-based method of processing multidimensional data which comprises the steps of: (i) obtaining categorical attributes associated with the multidimensional data; (ii) automatically ordering at least a portion of the categorical attributes associated with the multidimensional data wherein the automatic ordering step arranges the attributes to provide a substantially optimized visualization of the categorical attributes; and (iii) making results of the automatic ordering step available for use in accordance with a data visualization system.

Embodiments of the present invention preferably utilise one of three different ordering methodologies or algorithms. The algorithms are described in the context of three different exemplary systems that may use the ordering algorithms, and two specific exemplary applications: scatter plots and parallel coordinate plots. Each of the algorithms of the invention automatically finds an optimal order of categorical values or attributes based on a visual task. Advantageously, this is accomplished without requiring domain knowledge.

The specification also addresses the issue of how categorical values should be ordered to provide good visualizations by focusing on visual tasks. Specifically, we describe two visual tasks: (i) identifying groups of similar values within a categorical attribute; and (ii) visualizing relationships (e.g., temporal relationship) between values of different categorical attributes, i.e., finding data clusters.

These two visual tasks can further translate into objective functions, respectively, as follows: (i) Objective 1: arranging objects with similar behaviours in adjacent positions so that similar objects are visually similar -- in this way, similar objects can be identified and compared easily; (ii) Objective 2: arranging objects in a data cluster together so that these objects can be viewed as a group and the data patterns can be more pronounced.

To optimize these objective functions, one may develop ad-hoc algorithms directly or translate these objectives further into an optimization problem that in turn determines the order of the categorical values. The first two algorithms disclosed address the first objective. The third algorithm relates to the second objective.

The first algorithm is a sequential ordering algorithm (SOA) which orders categorical values one by one. For convenience, we refer to a categorical value as an object. In one embodiment, SOA operates as follows. First, the methodology adds a random object into an initially empty list called an ordered list (o-list). O-list records the ordered objects at the current step and is also the output of the algorithm. Then, SOA repeatedly finds the object that is the most similar to the current o-list based on certain similarity measures, and inserts this object into o-list until the o-list collects all objects. The complexity of SOA is linear with respect to the number of objects to be ordered.

The second algorithm is a hierarchical ordering algorithm (HOA) designed to take the advantage of the hierarchical clustering algorithm, a well-known algorithm for the clustering task in pattern recognition. The hierarchical clustering algorithm is described in R.O. Duda and P.E. Hard, "Pattern classification and scene analysis," Wiley, New York, 1973, the disclosure of which is incorporated by reference herein. The hierarchical clustering algorithm computes the hierarchical relationships among objects as its outputs. However, it does not fully determine the order of the objects. HOA provides an optimal total order of the hierarchical organized objects produced by the hierarchical clustering algorithm. HOA is a recursive top-down algorithm. It has the same computational complexity as that of the hierarchical clustering algorithm.

Often, visualization is used to visualize and identify possible data clusters. This leads to the second objective for ordering: arranging objects so that data patterns are more pronounced. We formulate this problem as a graph optimization problem, and develop an ordering algorithm, the third algorithm, which we refer to as a minimizing order conflicts (MOC) algorithm.

We now describe how to preferably integrate the aforementioned ordering algorithms with a visualization system. From the system perspective, data visualization usually has three main components: (i) data preprocessing; (ii) data management; and (iii) data viewer (or data visualization). One example of a visualization system with which the ordering algorithms of the invention may be integrated with is described in the above-incorporated U.S patent application identified by Serial No. 09/359,874 and entitled "Systems and Methods for Exploratory Analysis of Data for Event Management." However, it is to be appreciated that the methodologies of the invention may be implemented in other conventional visualization systems.

The ordering mechanism of the invention may be incorporated with a visualization system in various different ways. By way of a first example, ordering of categorical data can be used as a part of the preprocessing component. This approach is very simple, and does not require any modification to the visualization systems. In addition, this approach is transparent to users. This makes the first approach suitable for applications where the visualization system can not be modified and/or the data and its analysis are relatively stable. By way of a second example, an ordering mechanism can be embedded in the data management component. Doing so allows the user to interactively explore different ordering algorithms. By way of a third example, an ordering mechanism can be incorporated into the data viewer. The advantage of this approach is its flexibility for building an ordering mechanism specific to a visual task. In summary, there are a variety of different ways to incorporate the ordering mechanism into a visualization system. The choice of these methods largely depends on the application, and how a user wants to interact with the ordering mechanism.

The problem for ordering categorical data for better visualization is generic. Any technique for visualizing categorical data needs to address this problem. Our automatic algorithms can be used by almost all visualization approaches. In this invention, we focus on two popular visualization techniques: scatter plots and parallel coordinate plots to illustrate how our methods and systems are used to improve visual quality.

To summarize, this invention describes methods systems for automatically ordering categorical data to achieve better visualization. We describe three different algorithms to support two different visual objectives (or visual tasks). We illustrate three different system architectures, which incorporate the ordering mechanism. We further describe how to apply our method and system for scatter plots and parallel coordinate plots.

Mathematical optimization has been used by Anerst et. al. (see "Similarity clustering of dimensions for an enhanced visualization of multidimensional data," M. Ankerst, S. Berchtold, and D.A. Keim, InfoVis, 1998) to rearrange the dimensions (or variables) of data for visualizations. However, the specifics of our algorithms differ considerably from Anerst et. al., and we are interested in ordering categorical values rather than the dimensions of a plot.

Many extensions are possible to the systems and methods of our invention. First, although only two-dimensional scatter plots and parallel coordinate plots are described, our approach can be generalized into multidimensional plots. Second, the methods and systems developed are generic. They can be adapted to any visualization method designed for categorical data. Third, systems described are based on a generic system model such as the above-mentioned EventBrowser system. However, our methods can be applied to other generic system models. Fourth, our methods can be easily generalized to incorporate interactions with end users.

Embodiments of the present invention will now be described, by way of example, with reference to the accompanying drawings, in which:
FIG. 1 illustrates a scatter plot for an exemplary event data with random order;
FIG. 2 illustrates a scatter plot using HOA;
FIG. 3 illustrates a scatter plot using SOA;
FIG. 4 illustrates a scatter plot using MOC;
FIG. 5 illustrates a parallel coordinate plot for an exemplary event data with random order;
FIG. 6 illustrates a parallel coordinate plot using MOC;
FIG. 7 illustrates a generic visualization system;
FIG. 8 illustrates a system using the ordering mechanism as a part of data preprocessing;
FIG. 9 illustrates a system using the ordering mechanism as a part of data management;
FIG. 10 illustrates a system using the ordering mechanism as a part of a viewer;
FIG. 11 illustrates a generic subsystem of the ordering mechanism;
FIG. 12 illustrates a process flow of SOA;
FIG. 13 illustrates a pseudo-code of SOA;
FIG. 14 illustrates a process flow of HOA;
FIG. 15 illustrates method steps of HOA;
FIG. 16 illustrates the agglomaritive hierarchical clustering algorithm, and the hierarchical structure of objects;
FIG. 17 illustrates the pseudo-code of HOA;
FIG. 18 illustrates the pseudo-code of ordering called by HOA;
FIG. 19 illustrates an exemplary scatter plot;
FIG. 20 illustrates an optimal scatter plot of FIG. 21;
FIG. 21 illustrates steps of a MOC algorithm for a scatter plot;
FIG. 22 illustrates a corresponding graph problem of FIG. 21;
FIG. 23 illustrates a greedy algorithm for ordering clusters;
FIG. 24 illustrates MOC for parallel coordinate plots; and
FIG. 25 illustrates an exemplary hardware implementation for use with one or more ordering algorithms according to the invention.

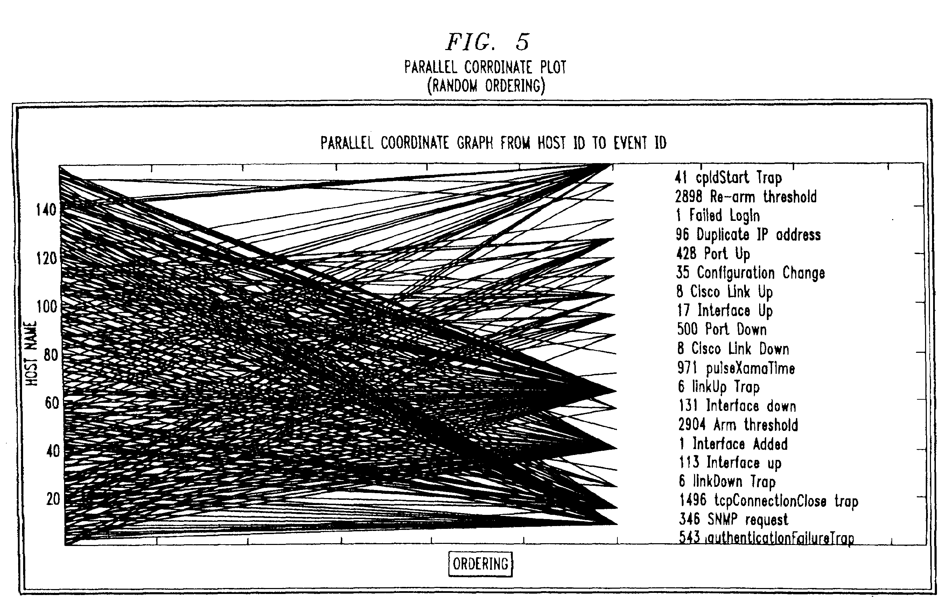

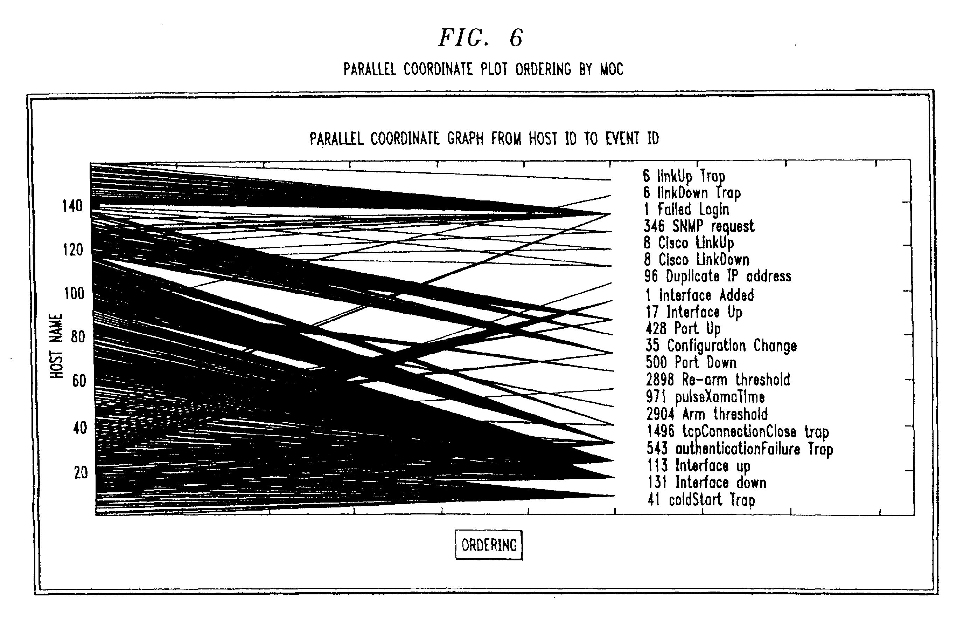

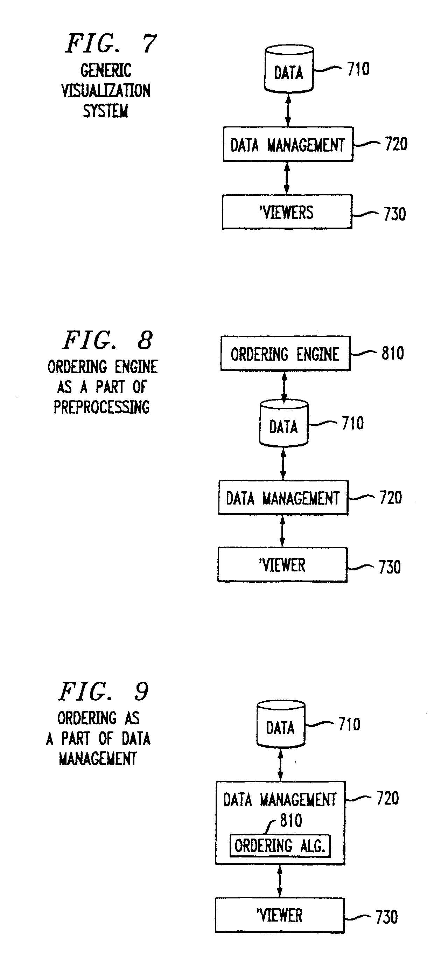

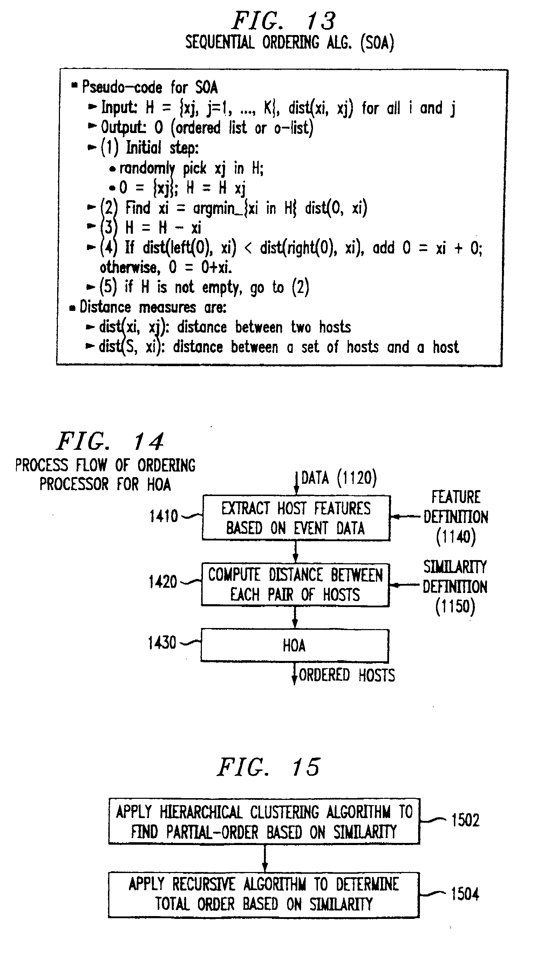

The following detailed description is organized as follows. First, we provide examples to illustrate the ordering problem, and compare our results of different ordering algorithms for scatter plots (FIGs. 1 through 4), and parallel coordinate plots (FIGs. 5 and 6). Second, we discuss the systems that may use our ordering algorithms in the context of FIGs. 7 through 11. Third, we describe our algorithms in detail in the context of FIGs. 12 through 24.

FIGs. 1 through 4 show different scatter plots of the event data described in background section above. The x-axis is time and the y-axis is the host name. An event is represented by a dot for a specific time and host. Since host names are categorical, they must be mapped into a unique number on the y-axis. That is, a total order is imposed on the categorical values.

As previously discussed, FIG. 1 illustrates ordering of host names on the y-axis in an arbitrary or random way. Since points are spread fairly "uniformly" across the plot, FIG. 1 provides little insight into the data. This approach serves as a baseline for comparison.

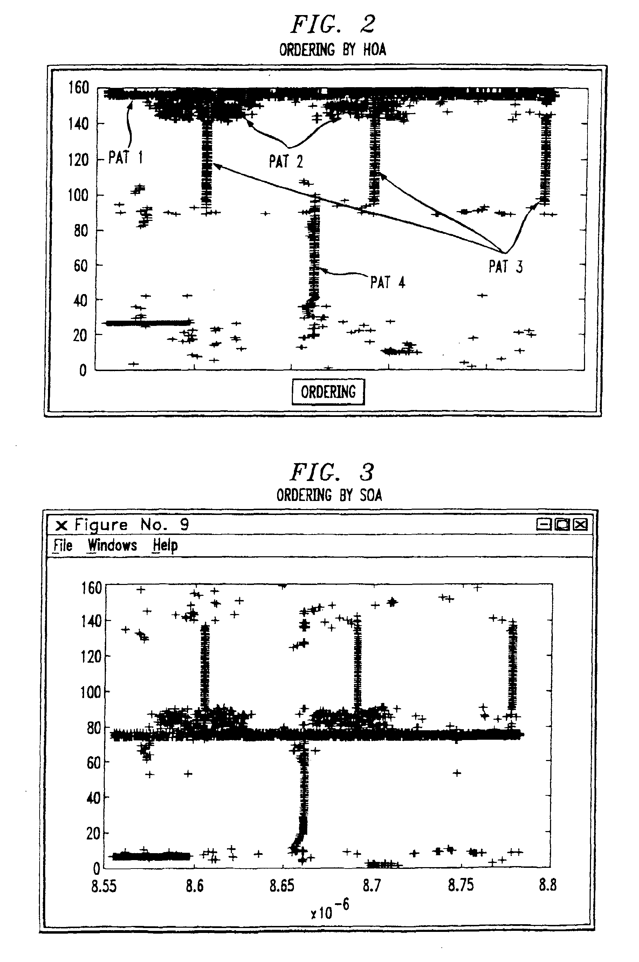

According to embodiments of the invention, three algorithms are provided for ordering categorical values based on different goals. These algorithms include: (i) a sequential ordering algorithm (SOA); (ii) a hierarchical ordering algorithm (HOA); and (iii) greedy ordering by minimizing ordering conflicts (MOC),. FIGs. 2 through 4 respectively show results associated with these algorithms.

FIG. 2 illustrates a scatter plot where hosts are ordered as a result of executing a hierarchical ordering algorithm (HOA) according to one embodiment of the invention. From FIG. 2, we see many patterns of interest: (a) a group of hosts that generate events continuously (at the top of the plot); (b) a repeated cloud-like pattern; and (c) a repeated spike-like pattern. These patterns and their implications for network administrators in a communications network are described in "EventBrowser: A flexible tool for scaleable analysis of event data," S. Ma and J.L. Hellerstein, DSOM, 1999. For example, consider pattern 1 (Pat 1). This pattern, which is a horizontal line, indicates that a small set of hosts generate events persistently. To learn more, we zoom-in, and find that one host in this pattern generates "tcpConnectionClose" events every 300 seconds. A second host periodically alternates between an "Arm threshold" (i.e., threshold exceeded) event and a "re-Arm threshold" (i.e., threshold no longer exceeded) event. It turns out that the first host is a router that was incorrectly configured. The second host was near a critical level for a key metric. The line patterns (Pat 3, 4) indicate that a sequence of events occurred on different hosts in close time proximity. Again, we may use the combination of the PlotViewer and the AttributeViewer of the EventBrowser to learn more about the patterns. The line patterns may represent such things as: the result of an early morning "cold start," which is a normal event pattern; a series of "link up" and "link down" events in the morning; or hundreds of SNMP events, either an "SNMP request" or "authentication failure," which may happen every day at a particular time. The latter pattern description may indicate a scan of a sequence of hosts, and may suggest a possible security intrusion. Pattern 2 (Pat 2) has a cloud-like appearance as the events in this pattern are clustered in a limited time window. It turns out that these are either "port up" or "port down" events generated as a result of mobile users connecting to and disconnecting from hubs. This happens only during normal working hours, and results in the limited time window for the pattern.

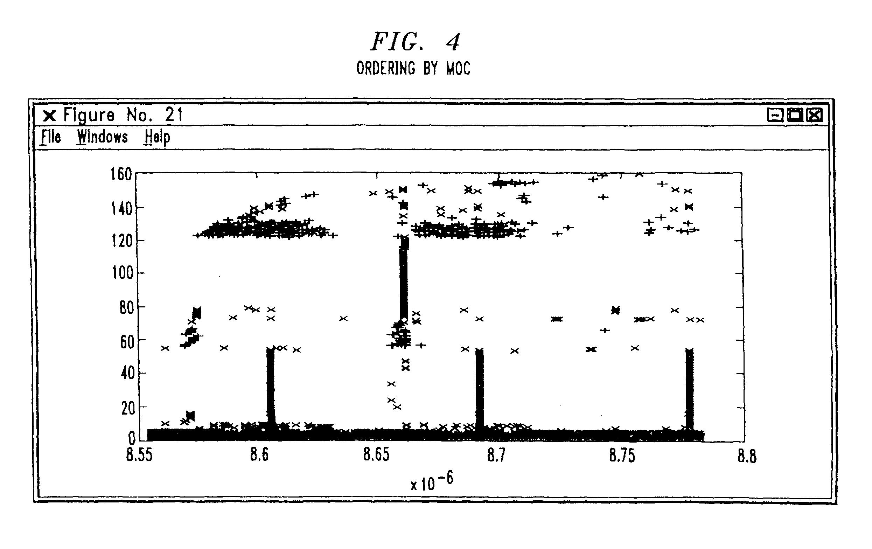

Figure 3 and 4 illustrate ordering of hosts based on sequential ordering algorithm (SOA) and algorithm for minimizing order conflicts (MOC), respectively. FIGs. 3 and 4 show that different ordering algorithms usually result in different orders of hosts and thus visually different plots. However, all of the inventive algorithms capture the main patterns in the data that can not be shown by random ordering.

The issue of ordering categorical data is important for a parallel coordinate plot (PCP) as well. FIGs. 5 and 6 are parallel coordinate plots of the same event data. The left axis is host name, and the right axis is event type. A line between a host and an event type indicates that at least one event is generated by this host with the associated event type. Note that the situation here differs from that in the scatter plot in that there are two categorical attributes -- host name and event type. FIG. 5 illustrates random ordering of both host names and event types. As a result, there are a large number of lines that cross over one another. This makes it difficult to identify relationships between hosts and event types. Indeed, an ideal PCP avoids crossovers as much as possible. FIG. 6 applies one of the ordering algorithms of the invention referred to as a minimizing ordering conflict (MOC) algorithm. The algorithm generally minimizes ordering conflicts for host names and event types. By reducing the number of crossovers, FIG. 6 provides considerably more insight than a random ordering of categorical values. For example, we can see that hosts emitting the "port up" or "interface up" event also respectively emit the "port down" or "interface down" event. That is, FIG. 6 shows that a set of hosts along the left-side vertical axis (labelled Host name) has links connecting to "port up" in the right-side vertical axis, while the same set of hosts connect to "port down." This indicates that hosts emitting the "port up" events also emit the "port down" events. The same can be seen for "interface up" and "interface down" events.

Now, we describe exemplary visualization systems that may incorporate the ordering mechanism of the invention. It is to be appreciated that by "ordering mechanism," we refer to an ordering engine that implements one or more of the three ordering algorithms (HOA, SOA, MOC) of the invention.

FIG. 7 depicts a generic visualization system such as, for example, the above-mentioned EventBrowser. The visualization system has three main components: a data source (710), a data management module (720), and viewers (730). The data source stores data to be visualized. The data management module provides basic data query operations, maintenance in-memory data, and provides correspondence among viewers. A viewer provides a means to visualize data using a predefined approach, such as visualization techniques (e.g., scatter plot), summarization techniques, etc. A viewer is also responsible for interacting with an end-user.

FIGs. 8, 9, and 10 show three visualization systems which implement the inventive algorithms in different ways.

FIG. 8 illustrates that the ordering mechanism or ordering engine 810 of the invention may be used as a part of the data preprocessing phase of the visualization system. That is, the ordering engine operates on the data in the data source 710 prior to use by the data management module 720 and viewer 730. One advantage of such a system is that the ordering mechanism is transparent to the visualization system so that an existing visualization system does not need to be changed to use the ordering mechanism. This implementation is well suited to those applications in which data is well-understood and relatively stable. That is, the process for analyzing the data is fixed so that similar reports may be generated and use the same ordering algorithms every time.

FIG. 9 illustrates a system in which the ordering engine 810 of the invention is incorporated as a part of the data management module 720 of the visualization system. This implementation adds more flexibility to use ordering algorithms because multiple ordering algorithms can be supported for multiple viewers, and ordering can be done on-the-fly.

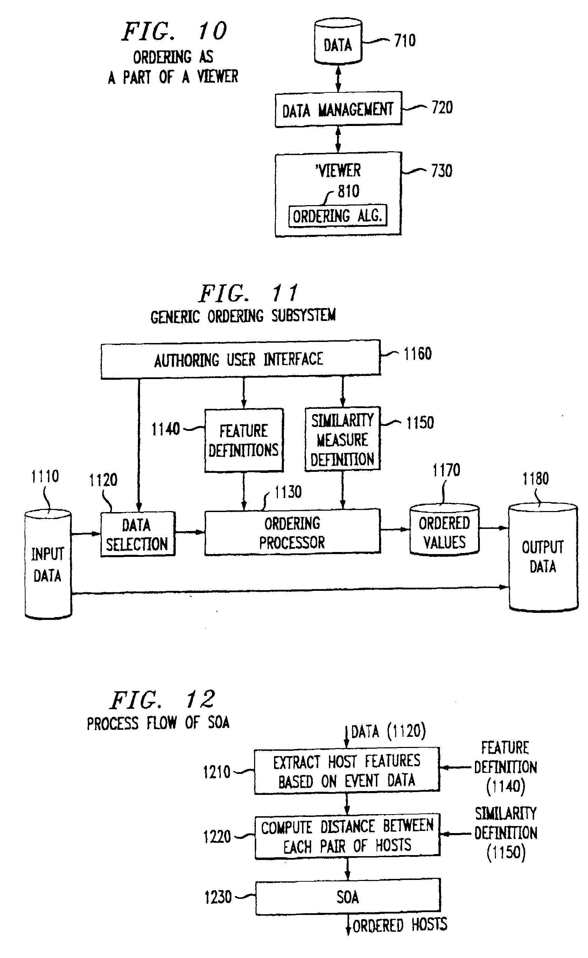

FIG. 10 illustrates a system in which the ordering engine 810 is implemented as part of a viewer 730. This implementation does not require any change of the data management module 720. In addition, this system makes it easy to tailor an ordering algorithm to meet specific needs of a user (or an application) by simply creating a special viewer.

In summary, FIGs. 8, 9, and 10 show three different ways to implement the ordering mechanism of the invention with a conventional visualization system. It is to be appreciated that choosing which system implementation to use largely depends on the application.

FIG. 11 depicts a generic subsystem of the ordering mechanism or ordering engine 810. Input data store 1110 contains generic data, either in memory or in database. The store 1110 typically contains the whole data set being processed for a given application. From the input data, a data selection module 1120 selects data and attributes to be used for calculating feature vectors and a similarity measure, and for determining which attribute the ordering algorithm will apply. Selected data and attributes are fed into the ordering processor 1130, the core part of the ordering engine. The ordering processor 1130 takes in additional user-specific parameters, such as the definitions of feature vectors 1140 and a similarity measure 1150. The ordering processor generally performs feature calculations, similarity calculations, and execution of the ordering algorithms. We will further describe the ordering processor for each ordering algorithm. The output of ordering processor is called the ordered values 1170, which are merged with the input data 1110 to get final output data 1180 for visualization. Two methods can be used in the merge module. One is to replace the unordered objects with the ordered one. The other is to create new attributes for the ordered objects. An end-user can control the ordering process through an authoring user interface 1160, which controls data selection 1120, defines feature vectors 1140, and defines a similarity measure 1150. Feature vectors 1140 can be defined in many ways. Examples of feature vectors are counts by time, distribution by time, etc. Likewise, similarity can be measured in different ways, such as minimum, maximum and average measures. Typically, the choice of the feature vector and similarity measure is application-specific, and can therefore be adjusted by a user.

FIG. 12 details the process flow of the ordering processor 1130 for the sequential ordering algorithm (SOA). The process flow includes three main blocks. First, in step 1210, feature vectors of selected data (1120) are calculated based on the definition of the feature vectors (1140). Second, in step 1220, a similarity measure is calculated based on the feature vectors and the definition of the similarity. For example, a similarity measure can be defined as Euclidean distance of feature vectors, e.g., compute distance between each pair of hosts. Third, in step 1230, SOA is executed to produce ordered objects. The details of SOA will now be explained.

FIG. 13 illustrates a pseudo-code representation of an SOA according to one embodiment of the invention. The inputs of SOA are a list of K objects represented by H={x1, ..., xk}, and a distance (or similarity) measure between objects denoted as dist(xi, xj). The output of SOA is a list of the ordered objects denoted by o. The first step (or initial step) of the algorithm is to randomly pick a host in H, assign it to o, and delete the host from H. Step 2 finds a host, x_j, in H who has the smallest distance to o. Step 3 removes x_j from H. Step 4 adds x_j into either the right or left-side of o depending on which side x_j is closer to. Steps 2, 3, and 4 are then repeated until H is empty. To better understand the o-list, we give the following example. Assume o-list = {1, 3, 5,4}. That is, the ordered list (o-list) has host 1, 3, 5, 4 in order. Host 1 is called the most left element of o-list, while host 4 is the most right. When host 6 needs to be added into the o-list, we check to see whether host 6 is close to host 1 or host 4 by comparing the corresponding similarity measures. If, for example, host 6 is closer to host 1, the new o-list will be o-list = {6, o-list} = {6,1,3,5,4}. FIG. 14 details the process flow of the ordering processor 1130 for the hierarchical ordering algorithm (HOA). HOA. Steps 1410 and 1420 are the same as steps 1210 and 1220 of FIG. 12, respectively, and therefore are not described again. The difference here is that, instead of the SOA being run, the HOA is executed in step 1430. The choice of which algorithm (SOA, HOA, MOC) to execute is made by the end-user.

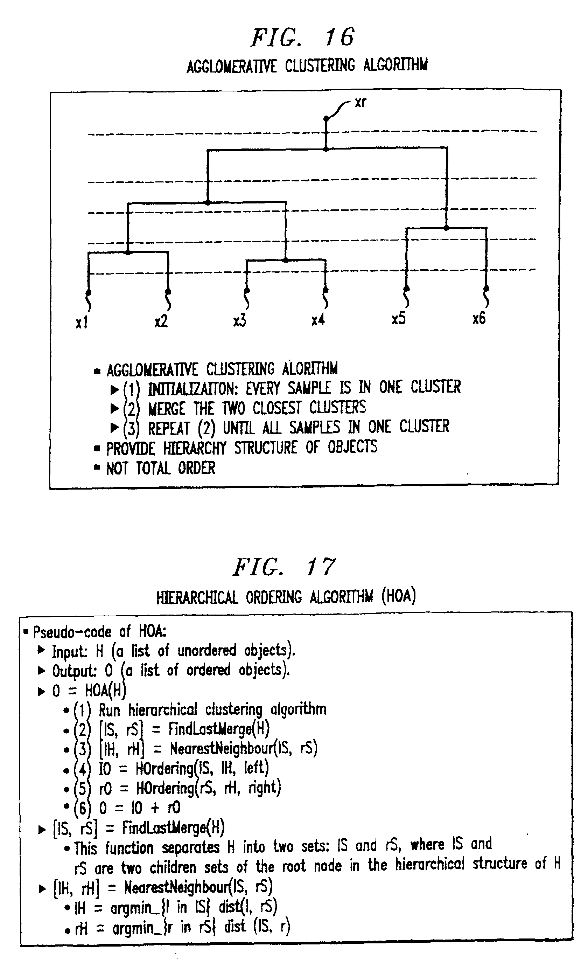

FIG. 15 shows two main steps of a HOA according to one embodiment of the invention. The first step 1502 is to apply a hierarchical clustering algorithm to find the hierarchical relationships of objects. FIG. 16 illustrates this hierarchical structure of objects. One key observation is that objects are only partially ordered through a hierarchical clustering algorithm. Therefore, a second step, step 1504, is needed to find the optimal total order of the objects based on the hierarchical structure.

FIG. 16 illustrates the well-known agglomerative hierarchical clustering algorithm. As the clustering algorithm is not a focus of the invention, we will not describe it in detail. For the sake of understanding of our third algorithm, we will briefly describe the output of the clustering algorithm. The output of the clustering algorithm is the hierarchical structure of objects, in which a leaf node represents an object, and a non-leaf node always has two offsprings, as illustrated in FIG. 16. As shown, node xr is referred to as the root node, while nodes x1 through x6 are referred to as leaf nodes. All other nodes in between the root node and leaf nodes are referred to as non-leaf nodes. The first step of the agglomerative hierarchical clustering algorithm is to initialize so that every sample is in a cluster. Then, the two closest clusters are merged. The merging step is repeated until all samples are in one cluster. Through this hierarchical structure, objects have a partial order, but not a total order. For example, objects x1 and x2 can exchange their orders without breaking the established hierarchical structure. Likewise, {x1, x2} can exchange order with {x3, x4}.

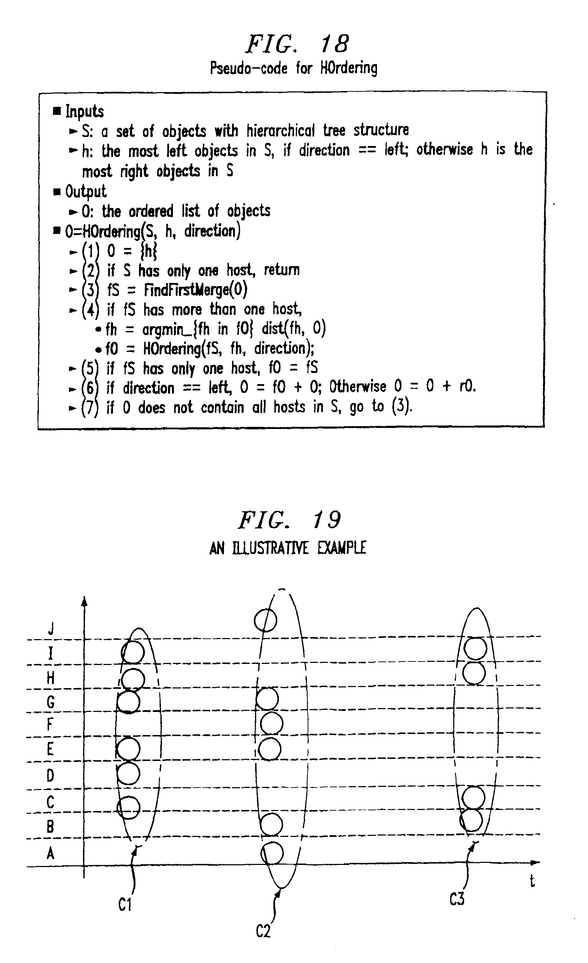

FIG. 17 provides a pseudo-code representation of a HOA according to one embodiment of the invention. The HOA takes a list of unordered objects as its input, and produces a list of ordered objects as its output. The HOA function starts with running the hierarchical clustering algorithm, which produces the hierarchical structure for H as illustrated in FIG. 16. Step (2) uses the root node (called last merge) in the hierarchy to separate H into ls, a set of objects on the left side of the root node (left offspring of the root node), and rS, a set of objects on the right side of the root node (right offspring of the root node). For the example in FIG. 16, lS = {x1, x2, x3, x4}, and rS={x5, x6}. Step (3) identifies lH, an object in ls, who is the most similar to rS. This object will be put into the most right position among objects in lS. Likewise, rH in rS is identified. Step (4) calls function HOrdering to provide the order denoted as lO for lS. HOrdering will be explained in the context of FIG. 18. Likewise, step (5) calls HOrdering to obtain rO: the ordered rS. Finally, lO and rO are merged to produce O, the ordered objects for H.

FIG. 18 provides a pseudo-code representation of one embodiment of Hordering, a function called by HOA. The inputs to the HOrdering algorithm are: S, a set of unordered objects with hierarchical structure, h, the most left or right objects in S depending on a parameter called "direction," where direction determines whether h is the most left or right object in S. The output of HOrdering is the ordered objects for S. HOrdering has seven steps as follows. Step (1) initializes O to h. Step (2) tests whether S has one object. If the test is positive, the program terminates and returns O. Otherwise, the algorithm continues. Step (3) finds fS, which represents the set of objects merged with O in the tree hierarchy of S. For examples, if O={x1}, in FIG. 16, fS = {x2}; if O={x1, x2}, then fS = {x3, x4}. Since fS represents a set of unordered objects, it needs to be ordered. We denote fO as the ordered objects of fS. Two situations are handled separately depending on whether fS has one or more objects. If fS has more than one object, step (4) first finds the closest object fh in fS to O, and then calls HOrdering recursively to order fS. If fS has only one host, fO is set to fS directly. Step (6) adds fO into O depending on the direction parameter. Step (7) tests whether O contains all objects in S. If so, the program stops and returns the list of ordered objects O; otherwise the program loops back to Step (3).

The third algorithm of the invention serves to minimize the order conflicts. Hence, we refer to the algorithm as the minimizing order conflicts (MOC) algorithm. The concept of minimizing order conflicts is introduced to account for the situation that an object is required to be placed in multiple positions in order to satisfy multiple ordering conditions. We will first describe the MOC algorithm for a scatter plot, and then for a parallel coordinate plot.

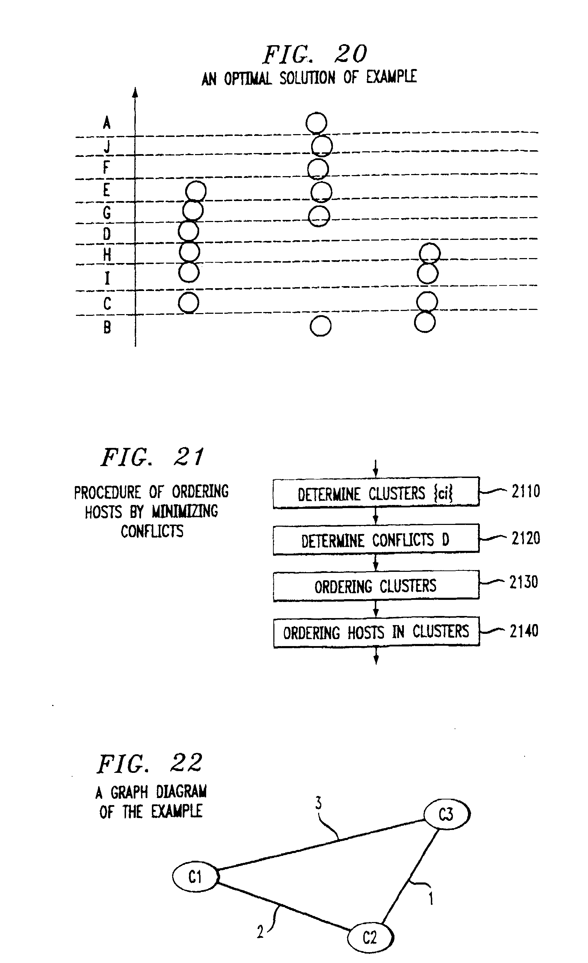

FIG. 19 depicts an illustrative example of a two-dimensional scatter plot in which the y-axis is host name (a categorical variable) and the x-axis is time. Natural clusters are defined based on events that occur close in time. This results in the clusters C1, C2 and C3 such that: hosts B, D, E, G, and I belong to C1; hosts A, B, E, F, G, and J constitute C2; and hosts B, C, H, and I define C3. Note that FIG. 19 is not a good scatter plot because the clusters have "holes" that separate their members. These holes make it difficult for a user to see groupings of similar hosts. However, by reordering the values on the y-axis, many holes can be removed. For example, if hosts B, C, I, and H are placed in adjacent positions as illustrated in FIG. 20, the holes in C3 are eliminated. Note that by placing hosts in a cluster adjacent to one another, we may eliminate holes in this cluster, but we may also create new holes in another cluster because a host may belong to multiple clusters.

We introduce some helpful notation. Let h_i be a set of categorical values belonging to cluster i, where i is an index of K natural clusters. Further, let d_{i,j} be a set of categorical values common to clusters i and j. Let |x| represent the number of elements in a set x. In the example, clusters c_{1} and c_{2} have hosts G and E in common; thus, a_{1,2}={G,E} and |d_{1,2}|=2. Note that |d_{i,j}| quantifies the magnitude of the potential order conflicts between i and j if these clusters are not adjacent. This observation turns out to be a key part in the algorithm we describe below.

FIG. 21 describes four main steps in the MOC algorithm for a scatter plot. These four steps are: (1) forming natural clusters of categorical values (step 2110); (2) determining conflicts matrix D between clusters (step 2120); (3) ordering clusters (step 2130); and (4) ordering hosts in clusters (step 2140).

The first step (2110) involves constructing natural clusters of the categorical values used on the y-axis. To do so, we first group together observations (e.g., events) that appear together using a clustering algorithm. We then construct natural clusters of categorical values based on their values in each group. For example, in the event data, we group together events based on their time of occurrence and the event type. A natural cluster is formed by determining those hosts that appear in the same group of observations.

The second step (2120) computes a matrix D, whose (i,j) element is the number of conflicts between the i-th cluster and the j-th cluster, i.e. d_{i,j}.

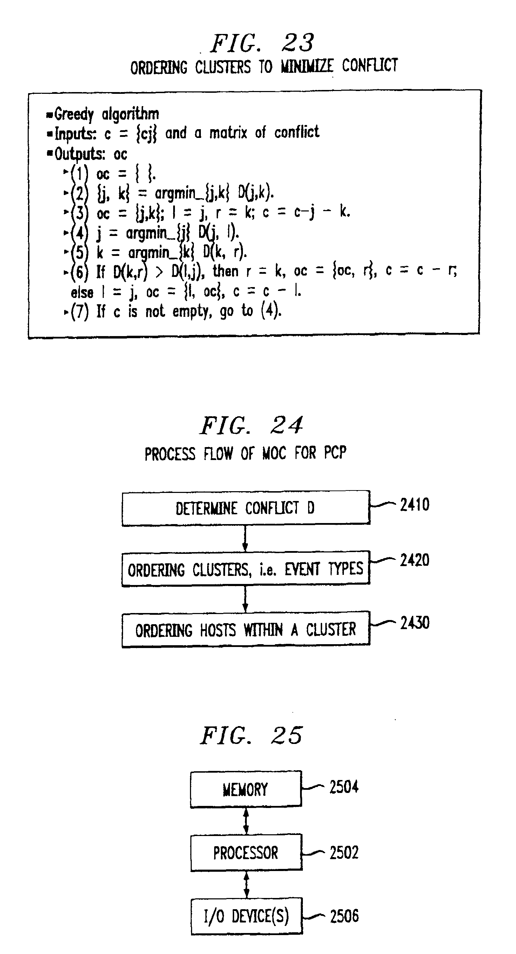

The third step (2130) orders the clusters found in the first step. This is preferably done in a way that minimizes order conflicts or, equivalently, maximizes resolved potential conflicts. This optimization problem can be further translated into a graph problem as illustrated in FIG. 22 for the illustrative example. In FIG. 22, nodes represent clusters, and arc weights specify the number of potential conflicts between clusters (i.e., |d_{i,j}|). Therefore, ordering clusters to maximize resolved potential conflicts is the same as finding a path that traverses each node exactly once and maximizes the sum of the weights of the arcs traversed. This is the Hamilton path problem, which is NP-complete. Many heuristic algorithms have been developed for this problem. We use a simple, greedy algorithm as described by FIG. 23.

The fourth step (2140) orders hosts within each cluster. The algorithm for ordering hosts within a cluster has the following four steps:
1. Order the values in $h_{1}-a_{1,2} so that they are sequenced before those in h_{2}.
2. Order the categorical values in h_{2}-a_{1,2} so that they are sequenced after those in h_{1}.
3. Position the values in a_{1,2} between those in h_{2}-a_{1,2} and h_{1}-a_{1,2}.
4. Within the sets a_{1,2}, h_{2}-a_{1,2} and h_{1}-a_{1,2}, categorical values are ordered arbitrarily.

FIG. 23 details a greedy algorithm for ordering clusters. It is equivalent to the shortest-path algorithm for the well-known Halmilton path problem. The inputs of the algorithm are a list of clusters and a matrix of conflicts between each two clusters. We use cj to represent the j-th cluster, and D(j,k) to represent the conflicts between the j-th and k-th clusters. The output of the algorithm is the ordered list of clusters denoted as oc. In the algorithm, we first initialize the ordered cluster oc. Step 2 then finds two clusters having the smallest number of conflicts. Step 3 sets oc to be {j,k}, and lets the most right element be k and the most left element be j. Step 4 finds cluster j, which has the smallest number of conflicts to the most left element of oc. Step 5 finds cluster k, which has the smallest number of conflicts to the most right element of oc. Step 6 further determines which one, between k and j, to add into oc based on the distance (or conflicts). Steps 4 to 6 are repeated until all elements in c are in oc.

Now, we describe the MOC algorithm for PCP. As we discussed in the context of FIGs. 5 and 6, visual quality of PCP can be improved by ordering categorical values so as to minimize crossovers. The algorithm is very similar to that for a scatter plot as described in FIG. 21, except that, for PCP, we cluster one attribute value based on the associated values of a second attribute value. For example, hosts that emit the same event type are placed into the same cluster. As before, this means that a host can be in many clusters. FIG. 24 describes the procedure of the MOC algorithm for PCP. Step 2410 computes the conflicts between clusters. Steps 2420 and 2430 are applied in the same manner as steps 2130 and 2140 in FIG. 21, respectively.

Referring now to FIG. 25, a block diagram illustrating an exemplary computer system for implementing one or more of the ordering algorithms of the invention is shown. The computer system may comprise a processor 2502 operatively coupled to memory 2504 and I/O devices 2506. It is to be appreciated that the term "processor" as used herein is intended to include any processing device, such as, for example, one that includes a CPU (central processing unit). The term "memory" as used herein is intended to include memory associated with a processor or CPU, such as, for example, RAM, ROM, a fixed memory device (e.g., hard drive), a removable memory device (e.g., diskette), flash memory, etc. In addition, the term "input/output devices" or "I/O devices" as used herein is intended to include, for example, one or more input devices, e.g., keyboard, for inputting data to the processing unit, and/or one or more output devices, e.g., CRT display and/or printer, for presenting results associated with the processing unit and/or a graphical user interface for a end-user. It is also to be understood that "processor" may refer to more than one processing device and that various elements associated with a processing device may be shared by other processing devices. Accordingly, software components including instructions or code for performing the methodologies of the invention, as described herein, may be stored in one or more of the associated memory devices (e.g., ROM, fixed or removable memory) and, when ready to be utilized, loaded in part or in whole (e.g., into RAM) and executed by a CPU. Thus, it is to be understood that the hardware implementation shown in FIG. 25 may preferably be used to implement the ordering engine 810 (and its constituent parts shown in FIG. 11), as well as the elements of a visualization system as shown in FIGs. 7 through 10.

Although illustrative embodiments of the present invention have been described herein with reference to the accompanying drawings, it is to be understood that the invention is not limited to those precise embodiments, and that various other changes and modifications may be affected therein by one skilled in the art without departing from the scope of the claims.

## Claims

1. A computer-based method of processing multidimensional data, the method comprising the steps of:
obtaining categorical attributes associated with the multidimensional data;
automatically ordering at least a portion of the categorical attributes associated with the multidimensional data wherein the automatic ordering step arranges the attributes to provide enhanced visualization of the categorical attributes; and
making results of the automatic ordering step available for use in accordance with a data visualization system.

2. Apparatus for processing multidimensional data, the apparatus comprising:
at least one processor operative to: (i) obtain categorical attributes associated with the multidimensional data; (ii) automatically order at least a portion of the categorical attributes associated with the multidimensional data wherein the automatic ordering operation arranges the attributes to provide enhanced visualization of the categorical attributes; and (iii) make results of the automatic ordering step available for use in accordance with a data visualization system.

3. A method according to claim 1 or an apparatus according to claim 2, wherein the categorical attributes are sequentially ordered based on one or more similarities associated with the categorical attributes.

4. A method according to claim 1 or an apparatus according to claim 2, wherein the categorical attributes are hierarchically ordered based on one or more similarities associated with the categorical attributes.

5. A method according to claim 1 or an apparatus according to claim 2, wherein the categorical attributes are ordered to substantially minimize ordering conflicts associated with the categorical attributes.

6. A method or apparatus according to claim 3, wherein the sequential ordering comprises:
calculating feature vectors for the categorical attributes to be ordered;
calculating similarity measures between the feature vectors; and
sequentially arranging the categorical attributes based on the similarity measures.

7. A method or apparatus according to claim 6, wherein the similarity measure is a distance measure between feature vectors.

8. A method or apparatus according to claim 4, wherein the hierarchical ordering comprises:
calculating feature vectors for the categorical attributes to be ordered;
calculating similarity measures between the feature vectors; and
hierarchically arranging the categorical attributes based on the similarity measures.

9. A method or apparatus according to claim 8, wherein the hierarchical arranging further comprises:
applying a hierarchical clustering algorithm to the categorical attributes to generate a hierarchical structure representing a partial ordering of the attributes based on similarity; and
applying a recursive algorithm to the hierarchical structure to determine a total ordering of the attributes based on similarity.

10. A method or apparatus according to claim 9, wherein the recursive algorithm comprises:
separating the hierarchical structure into a first set of attributes including attributes represented by nodes to the left of a root node and a second set of attributes including attributes represented by nodes to the right of the root node; and
arranging the attributes in one set based on their similarity to the attributes in the other set.

11. A method or apparatus according to claim 10, wherein the arranging step further comprises:
arranging the attributes in each set based on a direction parameter; and
merging the sets to form a set of totally ordered attributes.

12. A method or apparatus according to claim 5, wherein the ordering step to substantially minimize ordering conflicts comprises:
calculating clusters of categorical attributes;
generating conflicts matrixes between clusters;
ordering the clusters in accordance with the conflicts matrixes; and
ordering the categorical attributes within each cluster.
